(19) **Europäisches Patentamt / European Patent Office / Office européen des brevets**

(11) **EP 3 886 448 A1**

(12) # EUROPEAN PATENT APPLICATION
published in accordance with Art. 153(4) EPC

(43) Date of publication:
**29.09.2021 Bulletin 2021/39**

(21) Application number: **19891341.0**

(22) Date of filing: **29.09.2019**

(51) Int Cl.:
*H04N 21/443* (2011.01)          *H04N 21/431* (2011.01)
*H04N 21/44* (2011.01)           *H04N 21/4402* (2011.01)

(86) International application number:
**PCT/CN2019/109115**

(87) International publication number:
**WO 2020/108082 (04.06.2020 Gazette 2020/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2018 CN 201811427955**

(71) Applicant: **GUANGDONG OPPO MOBILE TELECOMMUNICATIONS CORP., LTD.**
**Dongguan, Guangdong 523860 (CN)**

(72) Inventor: **YANG, Hai**
**Dongguan, Guangdong 523860 (CN)**

(74) Representative: **Penza, Giancarlo**
**Bugnion S.p.A.**
**Viale Lancetti, 17**
**20158 Milano (IT)**

(54) **VIDEO PROCESSING METHOD AND DEVICE, ELECTRONIC EQUIPMENT AND COMPUTER READABLE MEDIUM**

(57)    The present application provides a video processing method and device, a kind of electronic equipment and a computer readable medium, relating to the technical field of video processing. The method comprises the following steps: the central processing unit obtains a target frame image corresponding to a video file; the central processing unit determines a target area in the target frame image; the central processing unit sends first image data corresponding to the target area to a graphic processing unit, and indicates the graphic processing unit to perform video enhancement operation on the first image data; the central processing unit synthesizes second image data corresponding to the area beyond the target area in the target frame image with the video enhanced first image data to form an image to be displayed. Therefore, image data in the area requiring optimization are sent to be processed by the graphic processing unit having higher processing speed, while image data in the area not requiring optimization are processed by the central processing unit, so that the parallel processing ability of the graphic processing unit can be utilized to enhance the speed of the processing the target area in a video, thereby shortening the processing time.

start

a target frame of a video file is acquired — S301

a target area in the target frame is determined — S302

first image data corresponding to the target area is sent to the graphics processing unit, and the graphics processing unit is instructed to perform video enhancement processing on the first image data — S303

second image data corresponding to an area in the target frame except the target area is combined with the video-enhanced first image data to form an image to-be-displayed — S304

end

FIG.3

EP 3 886 448 A1

**Description**

CROSS-REFERENCE TO RELATED APPLICATION

This application claims priority to a CN application No.201811427955.X filed on November 27, 2018. The entirety of the above-mentioned application is hereby incorporated by reference for all purposes.

TECHNICAL FIELD

The present disclosure relates to the field of video processing technologies, and particularly to a video processing method and apparatus, electronic device and computer-readable medium.

BACKGROUND

With the development of electronic technology and information technology, more and more devices can play videos. When playing a video, a device needs to perform, on the video, operations such as decoding, rendering and combining, and then displays the video on the display screen. For some places where monitoring is important, the video needs to be replayed for observing an area or target of interest. The related technology for fast video browsing mainly includes a quick playing technology and a video summarization technology. The quick playing technology enables the original high-definition video to be played at a speed which is several or even ten times the normal playing speed.

SUMMARY

A video processing method and apparatus, electronic device and computer-readable medium are provided in the present disclosure, to alleviate the above-mentioned drawbacks.

In a first aspect, a video processing method is provided in the embodiments of the present disclosure, which is applied to a central processing unit of an electronic device. The electronic device further includes a graphics processing unit. In the method, a target frame of a video file is acquired by the central processing unit. A target area in the target frame is determined. First image data corresponding to the target area is sent to the graphics processing unit, and the graphics processing unit is instructed to perform video enhancement processing on the first image data. Second image data corresponding to an area in the target frame except the target area is combined with the video-enhanced first image data to form an image to-be-displayed.

In a second aspect, a video processing apparatus is provided in the embodiments of the present disclosure, which is applied to a central processing unit of an electronic device. The electronic device further includes a graphics processing unit. The video processing apparatus includes an acquiring unit, a determining unit, an optimizing unit and a combining unit. The acquiring unit is configured to acquire a target frame of a video file. The determining unit is configured to determine a target area in the target frame. The optimizing unit is configured to send first image data corresponding to the target area to the graphics processing unit, and instruct the graphics processing unit to perform video enhancement processing on the first image data. The combining unit is configured to combine second image data corresponding to an area in the target frame except the target area, with the video-enhanced first image data, and form an image to-be-displayed.

In a third aspect, an electronic device is provided in the embodiments of the present disclosure. The electronic device includes a central processing unit, a graphics processing unit, a memory, a screen and one or more application programs. The one or more application programs are restored in the memory and are configured to be performed by the central processing unit. The one or more application programs are configured to perform the above-mentioned method.

In a fourth aspect, a computer-readable storage medium is provided in the embodiments of the present disclosure. The computer-readable storage medium stores program codes therein. The program codes can be invoked by a processor to perform the above-mentioned method.

BRIEF DESCRIPTION OF THE DRAWINGS

In order to more clearly illustrate the technical solutions in the embodiments of the present disclosure, the drawings used in the description of the embodiments will be briefly described below. Obviously, the drawings in the following description just show some embodiments of the present disclosure. Those of ordinary skill in the art can also obtain other drawings according to these drawings without paying any creative work.

FIG. 1 is a block diagram illustrating a video playing architecture provided by an embodiment of the present disclosure;
FIG. 2 is a block diagram illustrating an image rendering architecture provided by the embodiments of the present disclosure;

FIG. 3 is a method flowchart illustrating a video processing method provided by an embodiment of the present disclosure;

FIG. 4 is a schematic diagram illustrating an interface for selecting a type to-be-optimized provided by the embodiments of the present disclosure;

FIG. 5 is a schematic diagram illustrating a hiding effect of the interface for selecting the type to-be-optimized provided by the embodiments of the present disclosure;

FIG. 6 is a method flowchart illustrating a video processing method provided by another embodiment of the present disclosure;

FIG. 7 is a method flowchart illustrating a video processing method provided by another embodiment of the present disclosure;

FIG. 8 is a schematic diagram illustrating a first image and a second image provided by the embodiments of the present disclosure;

FIG. 9 is a module block diagram illustrating a video processing apparatus provided by an embodiment of the present disclosure;

FIG. 10 is a structural block diagram illustrating an electronic device provided by the embodiments of the present disclosure; and

FIG. 11 illustrates a storage unit for storing or carrying program codes for performing the video processing method according to the embodiments of the present disclosure.

DETAILED DESCRIPTION OF PREFERRED EMBODIMENTS

In order to enable those skilled in the art to better understand the solutions of the present disclosure, the technical solutions in the embodiments of the present disclosure will be described clearly and completely in conjunction with the drawings in the embodiments of the present disclosure.

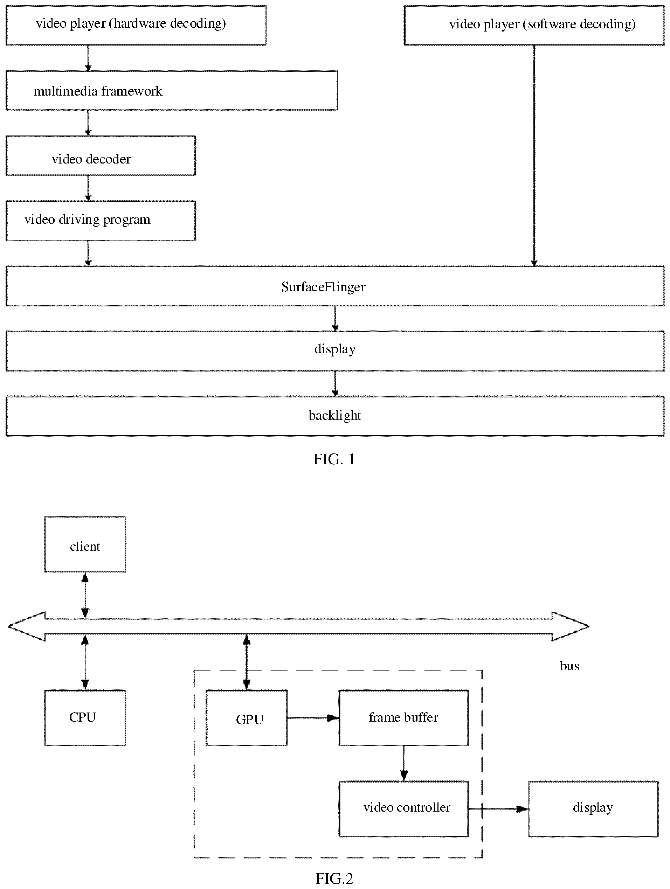

Referring to FIG. 1, a block diagram of a video playing architecture is illustrated. In specific, once an operating system acquires data to be played, audio and video data are parsed. Generally, a video file is composed of a video stream and an audio stream. Different video files have different packaging formats for the audio and video. A process of synthesizing the audio stream and the video stream into a media file is referred to as muxer, and a process of separating the audio stream and the video stream from the media file is referred to as demuxer. For playing a video file, it is required to separate the audio stream and the video stream from the file stream, and decode the audio stream and the video stream respectively. After the decoding, the resulting video frames may be directly rendered, and the resulting audio frames may be sent to a buffer of an audio output device for playback. Of course, the time stamp of rendering the video frames needs to be synchronized with the time stamp of playing the audio frames.

Specifically, video decoding may include hardware decoding and software decoding. Regarding the hardware decoding, a part of video data that was originally processed by a Central Processing Unit (CPU) is transferred to a Graphics Processing Unit (GPU), where the parallel computing power of the GPU is much higher than that of the CPU. This can greatly reduce the load on the CPU. After the occupancy rate of the CPU is decreased, some other applications may run simultaneously. Of course, for a good processor of excellent performance, such as i5 2320 or any quad-core processor from AMD, both the hardware decoding and the software decoding can be selected as required.

Specifically, as shown in FIG. 1, a Media Framework acquires, through an API interface with a client side, a video file to be played by the client side, and sends it to a video decoder. The Media Framework is a multimedia framework of Android. MediaPlayer, MediaPlayerService and Stagefrightplayer, constitute the basic multimedia framework of Android. The multimedia framework adopts a C/S structure, in which MediaPlayer serves as the client side of the C/S structure, and MediaPlayerService and the Stagefrightplayer serve as a server side of the C/S structure which is responsible for playing a multimedia file. The server side completes a request from the client side and makes a response thereto, through Stagefrightplayer. Video Decode is a super decoder that integrates the most commonly used decoding and playback functions for audio and video, and is used to decode video data.

The software decoding means that the CPU is used, through software, to decode the video. After the decoding, the GPU is invoked to render and combine the video, and the resulting video is displayed on a screen. The hardware decoding means that the video decoding tasks are independently performed by a dedicated daughter card without using the CPU.

Regardless of whether it is the hardware decoding or the software decoding, after the video data is decoded, the decoded video data is sent to a layer transfer module (SurfaceFlinger), and then rendered and synthesized by SurfaceFlinger for display on a display screen. SurfaceFlinger is an independent Service. It receives Surfaces of all Windows as input, calculates, according to parameters such as ZOrder, transparency, size, and position, the position of each Surface in the finally synthesized image, and then sends it to HWComposer or OpenGL to generate the final FrameBuffer for display on a specific display device.

As shown in FIG. 1, in the software decoding, the CPU decodes the video data to SurfaceFlinger for rendering and synthesis; while for the hardware decoding, the video data is decoded by the GPU and then sent to SurfaceFlinger for rendering and synthesis. SurfaceFlinger will call the GPU to achieve rendering and synthesis of images for display on a display screen.

As an implementation, as shown in FIG. 2, the process of rendering an image may be as follows. The CPU acquires a video file to-be-played that is sent by a client, decodes it to obtain decoded video data, and sends the decoded video data to the GPU. After completing the rendering, the GPU places the result of the rendering into a frame buffer (such as the FrameBuffer in FIG. 2). Then, a video controller reads, according to a HSync signal, data in the frame buffer line by line, performs digital-to-analog conversion processing on the data and thereafter, transmits the data to the display screen for display.

The inventor has found in the research that, for some places where monitoring is important, the video is needed to be replayed for observing an area or target of interest. The related technology for fast video browsing technology mainly includes a quick playing technology and a video summarization technology. The quick playing technology enables the original high-definition video to be played at a speed which is several or even ten times the normal playing speed. However, in order to increase the speed, it is usually needed to reduce the resolution or lose some frames, which makes it difficult for users to optimize a target area in the video while viewing the surveillance video.

In order to overcome the above-mentioned drawbacks, a video processing method is provided in the embodiments of the present disclosure, which is applied to an electronic device. The electronic device includes a central processing unit and a graphics processing unit. In the embodiments of the present disclosure, a processor serves as an execution body, and the method includes operations S301 to S304.

In S301, a target frame of a video file is acquired.

Specifically, when a client of the electronic device plays a video, the electronic device can acquire a video file to-be-played, and then decode the video file. Specifically, the above-mentioned software decoding or hardware decoding can be used to decode the video file. After the decoding, data of multiple frames to-be-rendered of the video file can be acquired. The data of the multiple frames needs to be rendered for display on a display screen.

Specifically, the electronic device includes the central processing unit and the graphics processing unit. As a specific implementation of acquiring the data of the multiple frames to-be-rendered of the video file, the central processing unit acquires the video file to-be-played sent by the client. As an implementation, the central processing unit acquires a video playing request sent by the client. The video playing request includes the video file to-be-played. Specifically, the video playing request may include identity information of the video file to-be-played, and the identity information may be a name of the video file. Based on the identity information of the video file, the video file can be searched out from a storage space which stores the video file.

Specifically, the video playing request is acquired by detecting touch statuses of playing buttons corresponding to different video files on an interface of the client. Specifically, display contents corresponding to multiple videos are displayed in a video list interface of the client. The display contents corresponding to the multiple videos include thumbnails corresponding to the individual videos. The thumbnails can be used as touch buttons. When a user clicks one thumbnail, the client can detect that the thumbnail is selected by the user, and the video file to-be-played is accordingly determined.

In response to detecting the user selects a video from the video list, the client enters a playing interface of the video, and a playing button of the playing interface is clicked. By monitoring a user touch operation, the client can detect the video file currently clicked by the user. Then, the client sends the video file to the CPU. The CPU decodes the video file by the hardware decoding or the software decoding. After being decoded, the video file to-be-played is parsed into data of the multiple frames.

In the embodiments of the present disclosure, the central processing unit acquires the video file to-be-played, and processes the video file according to a software decoding algorithm, to obtain the multiple frames of the video file.

In an embodiment, the graphics processing unit acquires the multiple frames of the video file and stores them in an off-screen rendering buffer. As an implementation, data of the multiple frames, that corresponds to the video file and is sent from the central processing unit to the frame buffer, is intercepted, and the intercepted multiple frames are stored in the off-screen rendering buffer.

Specifically, a program plug-in may be provided in the graphics processing unit, and the program plug-in detects the video file to-be-rendered that is sent from the central processing unit to the graphics processing unit. After the central processing unit decodes the video file to obtain image data to-be-rendered, the image data to-be-rendered is sent to the GPU and is intercepted by the program plug-in and stored in the off-screen rendering buffer. And this method is performed on the images in the off-screen rendering buffer to optimize the images for playing.

Specifically, it is illustrated by taking a certain frame in the video file as an example. To be specific, it is illustrated by taking a target frame as an example. The target frame is a certain frame of the multiple frames of the video file. After acquiring the video file which the client requests to play, the central processing unit of the electronic device decodes the video file to obtain the multiple frames, and selects, as the target frame, a frame currently to-be-processed.

In S302, a target area in the target frame is determined.

Specifically, target objects in an image captured by an image capturing device are recognized and classified. Specifically, the target objects may be acquired by using a target detection algorithm or a target extraction algorithm. The target extraction algorithm or a target clustering algorithm may be used to extract information on all outlines in the image captured by the image capturing device. Then, a category of an object corresponding to each outline can be searched out in a pre-learned model. The model corresponds to a matching database which stores information on multiple outlines and categories corresponding to the information of the individual outlines. The categories include human, animal, mountain, river, lake, building, road, etc.

For example, when the target object is an animal, the outline and characteristic information of the target object, such as the ear, horn, ear and limb, can be collected. When the target object is a human, facial features of the target object can be extracted. The method of extracting facial features may include a knowledge-based representation algorithm or an algebraic features or statistical learning-based representation method.

As an implementation, the target area corresponds to the target object, and the target object may be a moving object in the video. Therefore, the moving object in the video can be optimized, but those stationary background objects are not optimized. Specifically, the specific implementation for determining the target area in the target frame may include: acquiring, from the video file, multiple frames within a specified time period before the target frame; acquiring multiple moving objects in the multiple frames; determining a target moving object from the multiple moving objects; and determining an area corresponding to the target moving object in the target frame as the target area.

The specified time period may be a time period which corresponds to the preset number of consecutive frames before the target frame image. For example, a video frame rate of the video file is 20 Hz, which means that there are 20 frames in 1 second, and the duration of the specified time period may be calculated as: (1/20)*k, where k is a preset number. For example, the preset number is 40, and the duration of the specified time period is 2 seconds. Of course, the duration of the specified time period can be set by the user as required. If the duration of the specified time period is 2 seconds, the specified time period is a time period of 2 seconds preceding the target frame. Assuming that the time point corresponding to the target frame of the video file is the 20th second, the specified time period is a time period between the 18th second and 20th second, and the moving targets within this time period are extracted to obtain the multiple moving objects. As an implementation, the multiple moving objects can be displayed on the screen. Specifically, the thumbnails of the moving objects acquired from the multiple frames within the specified time period of the video file are displayed on the screen. A selected thumbnail is acquired, and a moving object corresponding to the selected thumbnail is used as the target moving object. An area corresponding to the target moving object in the target frame is determined as the target area.

As another implementation, a reference picture may also be acquired, where the reference picture may be a picture input by a user into the electronic device. For example, the user uses a camera of the electronic device to capture a reference photo, and an image of the reference photo is acquired as the reference picture. Alternatively, the reference picture may be acquired from a server or a network platform. The electronic device acquires the target object in the reference picture, for example, the face image in the reference picture, and searches, from the multiple moving objects, for a moving object matching the target object in the reference picture. The searched moving object is used as the target moving object.

In other embodiments, a target object selected by the user through a touch gesture on the screen may be used as a target object to-be-optimized corresponding to the video file, and an area corresponding to the target object to-be-optimized is used as the target area.

In addition, there may be a situation that the user accidentally touches the screen instead of continuously pressing a certain area of the screen, that is, a certain area of the screen is not actually selected, which may cause misdetection of the touch gesture. In view of this, in response to detecting the touch gesture acting on the screen, the duration of the touch gesture can be determined. If the duration is greater than a preset duration, the touch gesture is considered to be valid. If the duration is less than or equal to the preset duration, the touch gesture is discarded. For the touch gesture that is considered to be valid, the operation of determining the target location corresponding to the touch gesture on the screen can be followed. The preset duration can be set by the user as required. For example, the preset duration may be 1-3 seconds.

The target location corresponding to the touch gesture is determined according to a record table for the touch gesture. Specifically, locations on the screen can be set according to individual independent touch units (which can be touch capacitances, etc.) on the touch screen. For example, the touch unit at the upper left corner of the screen is taken as origin, and coordinate axes are set horizontally and vertically to obtain a coordinate system. Each coordinate in the coordinate system can be determined according to the arrangement of the touch units. For example, coordinates (10, 20) represent a touch unit which is the 10th touch unit in the horizontal direction and the 20th touch unit in the vertical direction.

When the user touches the screen, if the input touch gesture can be sensed by the touch unit in a certain area of the screen, the location of the touch unit which senses the touch gesture is the target location corresponding to the touch gesture on the screen, and the area corresponding to the target location is the target area.

In S303, first image data corresponding to the target area is sent to the graphics processing unit, and the graphics processing unit is instructed to perform video enhancement processing on the first image data.

The video enhancement processing is configured to improve the image quality of the video file by performing parameter optimization processing on images in the video file. The image quality includes parameters which influence the viewing effect of the video, such as the definition, sharpness, lens distortion, color, resolution, color gamut range, and purity of the video. The combination of different parameters can achieve different display enhancement effects. For example, a horrible atmosphere can be created by performing barrel distortion with the location of the portrait as the center, and modifying the color of the current picture into gray.

In an implement, the video enhancement processing includes at least one of exposure enhancement, denoising, edge sharpening, contrast enhancement, or saturation enhancement.

The exposure enhancement is used to increase brightness of the image. For area(s) on the image where the brightness is low, the respective brightness may be increased by the histogram of the image. In addition, the brightness of the image may also be increased by nonlinear superposition. Specifically, let I represent a dark image to be processed, and T represent bright image after processing, and the exposure enhancement method may be expressed as T(x)=I(x)+(1-I(x))*I(x), where T and I are both images having values of [0,1]. If the effect is not good enough after one processing, the algorithm may be iterated multiple times.

The denoising on image data is used to remove noises of the image. Specifically, the quality of the image may be deteriorated due to disturbance and effect caused by various noises during the generation and transmission, which negatively influences the subsequent processing on the image and the visual effect of the image. There are many kinds of noises, such as electrical noise, mechanical noise, channel noise and other noises. Therefore, in order to suppress the noise and improve image quality to facilitate higher-level process, a denoising preprocessing has to be performed on the image. From the viewpoint of the probability distribution of noises, the noises include Gaussian noise, Rayleigh noise, gamma noise, exponential noise and uniform noise.

Specifically, a Gaussian filter may be used to denoise the image. The Gaussian filter is a linear filter which can effectively suppress the noises and smooth the image. The working principle of the Gaussian filter is similar to that of a mean filter, where each of the two filters takes the average value of the pixels in the window of the filter as an output. The coefficients of the window template of the Gaussian filter are different from those of the mean filter. The coefficients of the template of the mean filter are all set as 1, whereas the coefficients of the template of the Gaussian filter decrease as the distance from the center of the template increases. Therefore, the Gaussian filter less blurs the image compared with the mean filter.

For example, a 5×5 Gaussian filter window is generated, and sampling is performed with the center of the template set as the origin. The coordinates of various positions of the template are plug into the Gaussian function, thereby obtaining the coefficients of the template. Then, the image is convolved with the Gaussian filtering window so as to be denoised.

The edge sharpening is used to make a blurred image become clear. There are generally two methods for image sharpening: one is differentiation, and the other is high-pass filtering.

The contrast enhancement is used to improve the image quality of the image, so as to make the colors in the image contrasting. Specifically, contrast stretching is one way for image enhancement, and it also belongs to gray-scale transformation. By means of the gray-scale transformation, the gray-scale values are expanded to the entire interval of 0-255; accordingly, the contrast is obviously and substantially enhanced. The following formula may be used to map the gray-scale value of a certain pixel to a larger gray-scale space:

$$I(x,y)=[(I(x,y)-Imin)/(Imax-Imin)](MAX-MIN)+MIN;$$

where Imin and Imax are the minimum and maximum gray-scale values of the original image, and MIN and MAX are the minimum and maximum gray-scale values of the expanded gray-scale space.

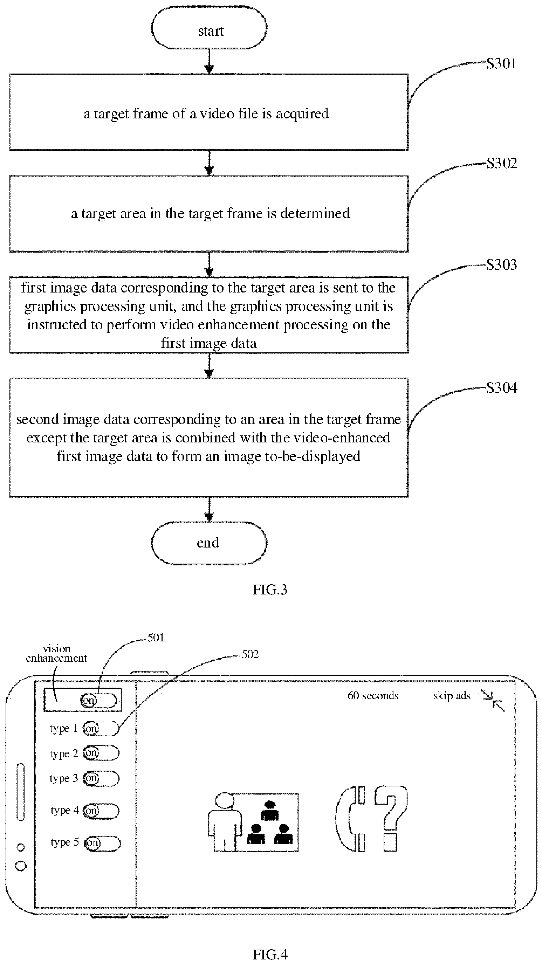

Specifically, the user can set a type to-be-optimized for the video file to-be-played in the electronic device. The type to be optimized can be a type of the target object, for example, it may be male, female, sky, mountain, river, or sign etc. Specifically, the user inputs the type to-be-optimized at the video playing interface. As shown in FIG. 4, a main switch 501 for video enhancement and sub switches 502 for the individual target object types are displayed on a video interface. Specifically, the main switch 501 for video enhancement is configured to turn on or off the function of video enhancement, where the function of video enhancement is configured to provide optimization to the image data of the video file. When the main switch 501 for video enhancement is turned on, the user can choose to turn on the sub switch(es) 502 of a certain or some target object types. As shown in FIG. 4, type 1 corresponds to a target object type, such as male; type 2 corresponds to another target object type, such as female, where type 1 and type 2 are exemplary texts. Specifically, in practice, the texts can be changed according to the specific target object types, for example, type 1 may be changed to a male character.

When the main switch 501 for video enhancement is turned on, the user chooses to turn on the type of the target object to-be-optimized which needs to be optimized. That is, the sub switch 502 of the type desired to be optimized is turned on, and the electronic device can acquire the type to-be-optimized corresponding to the video file.

When the main switch 501 for video enhancement is turned off, the sub switches 502 corresponding to the individual types are gray in the interface for selecting the type to-be-optimized. That is, the sub switches 502 cannot be selected to be turned on or off. In other words, no response is made to the operation made by an application on the sub switches.

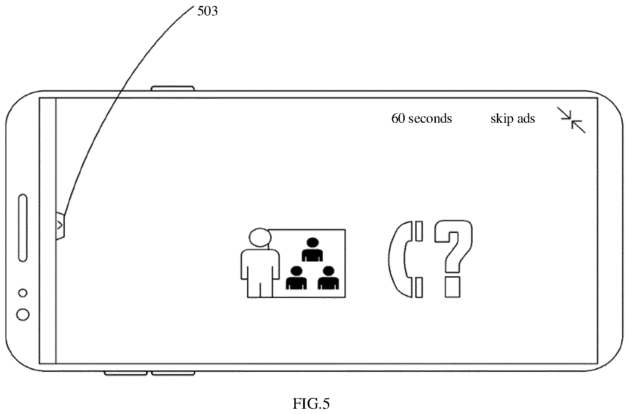

In addition, the interface for selecting the type to-be-optimized shown in FIG. 4 can be hidden. Specifically, as shown in FIG. 5, a sliding button 503 is provided on one side of the interface for selecting the type to-be-optimized. The interface for selecting the type to-be-optimized can be selected to be hidden or slid out by means of the sliding button 503. As an implementation, when the interface for selecting the type to-be-optimized is hidden, the interface for selecting the type to-be-optimized can be slid out by clicking the sliding button 503; and when the interface for selecting the type to-be-optimized is slid out, the interface for selecting the type to-be-optimized can be hidden by clicking the sliding button 503.

In addition, when selecting the type to-be-optimized, the user can input an indication for the optimization degree. Based on the indication for the optimization degree, the degree of optimizing the type to-be-optimized can be adjusted. For example, the exposure enhancement is selected, and the user inputs, for example through an input interface or by pressing the volume key, an indication for the degree of the exposure enhancement. For example, each time the volume up key is pressed, the exposure degree will be increased by 2%, and correspondingly, each time the volume down key is pressed, the exposure degree will be reduced by 2%. The user can freely adjust the optimization degree.

The individual pieces of online video data are stored in the frame buffer after being optimized. Then, they are fetched according to the screen refresh rate and combined for display on the screen. Specifically, the individual pieces of online video data may be decoded to obtain the multiple frames to-be-rendered corresponding to the individual pieces of online video data, and the obtained frames are stored in the image buffer. According to the screen refresh rate, one frame to-be-rendered corresponding to each piece of online video data is fetched from the image buffer. Multiple fetched frames to-be-rendered are rendered and combined into one composite image. The composite image is displayed on the screen.

In addition, considering that some video files have a small size, which, when being processed by the central processing unit, do not cause too much burden to the central processing unit, that is, the processing speed of the central processing unit can still meet the requirements, in this case, it is not necessary to process such video files by the graphics processing unit. Accordingly, it may be determined, according to frame size, whether to use the graphics processing unit for the processing. Specifically, the frame size of the video file is acquired, and it is determined whether the frame size meets a specified condition. If the frame size meets the specified condition, the first image data corresponding to the target area is sent to the graphics processing unit, and the graphic processing unit is instructed to perform video enhancement processing on the first image data. If the frame size does not meet the specified condition, the video enhancement processing is performed on the first image data. In other words, if the frame size does not meet the specified condition, the video enhancement processing is performed on the first image data directly by the central processing unit.

The frame size of the video file may include an image data size and a pixel-based frame size. The image data size means a data size of a specified frame of the video file, that is, a size of a storage space occupied by the specified frame. For example, the size of the specified frame is 1M, and the image data size is 1M. The data size of the specified frame may be an arithmetic value of the data sizes of all frames of the video file. The arithmetic value may be the average, minimum, or maximum of the data sizes of all frames of the video file, or may also be the data size of the first frame of the video file, or may also be the average, minimum, or maximum of data size of all key frames of the video file. In addition, considering that the video file may be an online video file, the data size of the specified frame of the video file may be an arithmetic value of the data sizes of all frames of the current video file.

The pixel-based frame size may be the physical resolution of the video file, that is, the image resolution of the video file.

Specifically, when the frame size is the image data size, a specific implementation for determining whether the frame size meets the specified condition includes that: it is determined whether the image data size is greater than a specified value, and the frame size is determined to meet the specified condition if the image data size is greater than the specified value, or the frame size is determined not to meet the specified condition if the image data size is less than or equal to the specified value.

When the frame size is the pixel-based frame size, the specific implementation for determining whether the frame size meets the specified condition includes that: it is determined whether the pixel-based frame size is greater than a specified pixel-based frame size, and the frame size is determined to meet the specified condition if the pixel-based frame size is larger than the specified pixel-based frame size, or the frame size is determined not to meet the specified condition if the pixel-based frame size is less than or equal to the specified pixel-based frame size.

The specified pixel-based frame size can be set according to actual usage. For example, the pixel-based frame size may be a resolution of 1280×720. If the pixel-based frame size of the video file to-be-played is greater than the resolution of 1280×720, the frame size is determined to meet the specified condition. If the pixel-based frame size of the video file to-be-played is less than or equal to the resolution of 1280×720, the frame size is determined not to meet the specified condition.

In S304, second image data corresponding to an area in the target frame except the target area is combined with the video-enhanced first image data to form an image to-be-displayed.

Specifically, all image data corresponding to the target frame are target image data. The target image data is composed of the first image data and the second image data, and each of the first image data and the second image data corresponds to a pixel area. For example, the first image data corresponds to a first pixel area, and the second image data corresponds to a second pixel area. After the first image data undergoes the video enhancement processing, the pixel area corresponding to the first image data is still the first pixel area. The central processing unit combines the first image data with the second image data into the image to-be-displayed, based on the first pixel area and the second pixel area. The image to-be-displayed can be displayed on the screen.

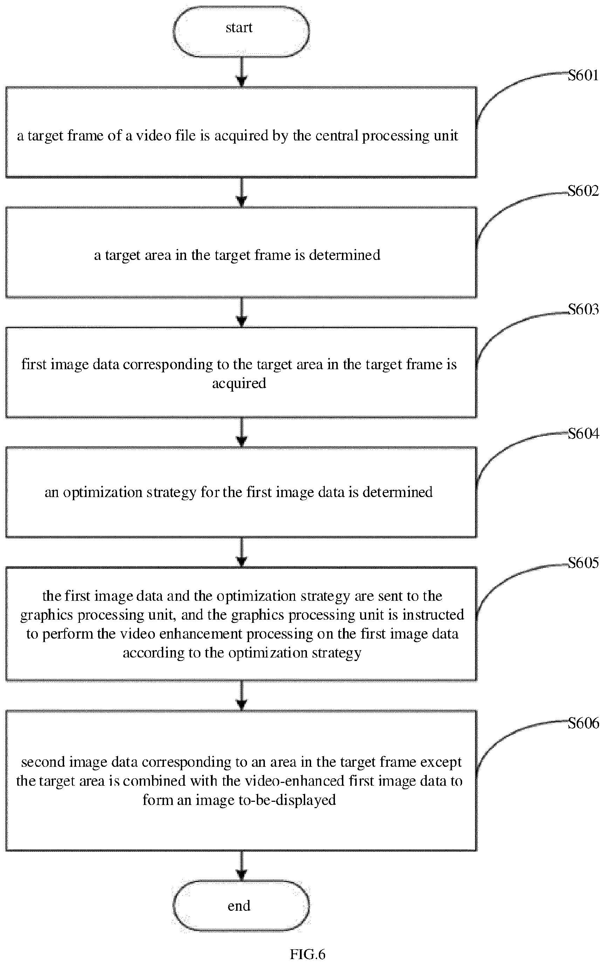

In addition, besides selecting different optimization strategies through the interface shown in FIG. 4, the optimization strategy can also be selected according to the first image data. Specifically, referring to FIG. 6, a video processing method is provided in the embodiments of the present disclosure, which is applied to an electronic device. The electronic device further includes a central processing unit and a graphics processing unit. In the embodiments of the present disclosure, a processor serves as the execution body, and the method includes operations S601 to S606.

In S601, a target frame of a video file is acquired by the central processing unit.

Considering that there are a large number of images of the video file, the processing speed may be slow. For some monitoring fields, it is required to know the location and movement trajectory of the target object in real time, instead of accurately knowing the precise action of the target object. For example, for the surveillance of a suspicious vehicle, it is only needed to know the specific location of the vehicle at a certain moment, instead of knowing the precise driving path of the vehicle. Accordingly, in the case where the video file has a high video frame rate, frame dropping processing can be performed on the video file. Specifically, the video frame rate of the video file is acquired, and it is determined whether the video frame rate is greater than a specific frame rate. If the video frame rate is greater than the specific frame rate, the frame dropping processing is performed on the video file, and the video file after undergoing the frame dropping processing is taken as the currently acquired video for the performance of S601 and subsequent operations.

The specific frame rate may be set by the user as required, for example, it can be 60Hz. The frame dropping processing may be performed as follows.

In a first implementation, when the current frame rate of the online video data reaches the condition of frame dropping, frame skipping processing is performed on the online video data at a preset frame dropping interval.

Alternatively, in a second implementation, when the current frame rate of the online video data reaches the condition of frame dropping, a first preset number of the frames preceding the last frame are sequentially discarded.

The frame dropping processing may be performed on the online video data by means of the above two implementations. For the first implementation of the frame dropping processing, the key frames carrying important information are preferably retained, and the less important non-key frames are discarded. Alternatively, the preset interval can also be set as every other frame or every two frames. For example, the current frame rate of the online video data is 24 frames per second, and when the first preset interval number is set as every other frame, 1/2 frame skipping processing is performed on the online video data, that is, half of the frames are discarded. At this time, the frame rate of the online video data is 12 frames per second. Alternatively, when the first preset interval number is set as every two frames, 1/3 frame skipping processing is performed on the online video data. At this time, the frame rate of the online video data is 8 frames per second. For the second implementation of the frame dropping processing, the first preset number can be set as 10 frames. For example, the current frame rate of the online video data is 24 frames per second. When the current frame rate of the online video data reaches the condition of frame dropping, 10 frames preceding the last frame of 24 frames are sequentially discarded, and the frame rate of the online video data is decreased to 14 frames per second. In addition, in order to avoid a mosaic phenomenon appearing on the online video data, it can be dropped frame by frame until the frame rate is decreased to match the current network condition. For the second implementation of the frame dropping processing, since non-key frames are secondary frames and key frames are primary frames, at the time of discarding frames from back to front, the less-important non-key frames are preferentially discarded, and the key frames carrying important information are retained.

After the frame dropping processing, the number of images required to be processed by the electronic device per second can be decreased, thereby speeding up the optimization on the target area, and improving the real-time capability.

In S602, a target area in the target frame is determined.

In S603, first image data corresponding to the target area in the target frame is acquired.

In S604, an optimization strategy for the first image data is determined.

As an implementation, different strategies may be selected according to the different types of the first image data of the target area. Specifically, the types may be human, animal, food, scenery etc.

Then, according to the corresponding relationships between the types and video enhancement algorithms, an optimization strategy corresponding to the type of the first image data is determined. Specifically, the optimization strategy may include at least one of exposure enhancement, denoising, edge sharpening, contrast enhancement or saturation enhancement. The selection from the exposure enhancement, the denoising, the edge sharpening, the contrast enhancement, and the saturation enhancement is different for the corresponding target objects of different types, such as those shown in Table 1.

Table 1

| types of the target objects | video enhancement algorithms |
|---|---|
| scenery | exposure enhancement, denoising, contrast enhancement |
| human | exposure enhancement, denoising, edge sharpening, contrast enhancement, saturation enhancement |
| animal | exposure enhancement, denoising, edge sharpening |
| food | edge sharpening, contrast enhancement |

According to the corresponding relationships shown in Table 1, the optimization strategy corresponding to the type of the first image data can be determined, thereby the parameter optimization processing is performed on the image of the first image data, and thus a super definition visual effect is provided for the image in the target area.

As another implementation, a resolution of the first image data is acquired. According to the resolution of the first image data, the optimization strategy for the first image data is determined.

In some embodiments, it is determined whether the resolution of the first image data is greater than a preset resolution. If the resolution of the first image data is less than the preset resolution, the optimization strategy configured for the first image data includes the denoising and the edge sharpening. If the resolution of the first image data is greater than or equal to the preset resolution, the optimization strategy configured for the first image data includes the saturation enhancement.

In other embodiments, it is determined whether the resolution of the first image data is greater than the preset resolution. If the resolution of the first image data is less than the preset resolution, a first optimization strategy is configured for first image data. If the resolution of the first image data is greater than or equal to the preset resolution, a second optimization strategy is configured for the first image data.

Both the first optimization strategy and the second optimization strategy include five optimization items, i.e., the exposure enhancement, the denoising, the edge sharpening, the contrast enhancement and the saturation enhancement, but the optimization level of each optimization item is different for the first optimization strategy and the second optimization strategy. For example, for the first optimization strategy, the optimization level of the exposure enhancement is $b1$, the optimization level of the denoising is $q1$, the optimization level of the edge sharpening is $r1$, the optimization level of the contrast enhancement is $d1$, and the optimization level of the saturation enhancement is $h1$. For the second optimization strategy, the optimization level of the exposure enhancement is $b2$, the optimization level of the denoising is $q2$, the optimization level of the edge sharpening is $r2$, the optimization level of the contrast enhancement is $d2$, and the optimization level of the saturation enhancement is $h2$, where $q1$ is greater than $q2$, $r1$ is greater than $r2$ and $h1$ is less than $h2$. For example, the values of 0-9 are used to respectively represent the individual levels, the greater the value, the higher the level, and the higher the optimization degree. Taking the exposure enhancement as an example, the higher the optimization level of exposure enhancement, the higher the brightness of enhanced image. In a case where the optimization levels of the denoising and the edge sharpening in the first optimization strategy are 8 and 9 respectively, while the optimization levels of the denoising and the edge sharpening in the second optimization strategy are 3 and 4 respectively, and the resolution of the first image data is less than the preset resolution, the denoising and the edge sharpening are increased compared with the case where the resolution of the first image data is greater than or equal to the preset resolution. Similarly, in the case where the resolution of the first image data is greater than or equal to the preset resolution, the saturation enhancement and detail enhancement are increased compared with the case where the resolution of the first image data is less than the preset resolution.

In S605, the first image data and the optimization strategy are sent to the graphics processing unit, and the graphics processing unit is instructed to perform the video enhancement processing on the first image data according to the optimization strategy.

In S606, second image data corresponding to an area in the target frame except the target area is combined with the video-enhanced first image data to form an image to-be-displayed.

It should be noted that the portions of the above operations which are not described in detail can be referred to the aforementioned embodiments, which will not be repeated here again.

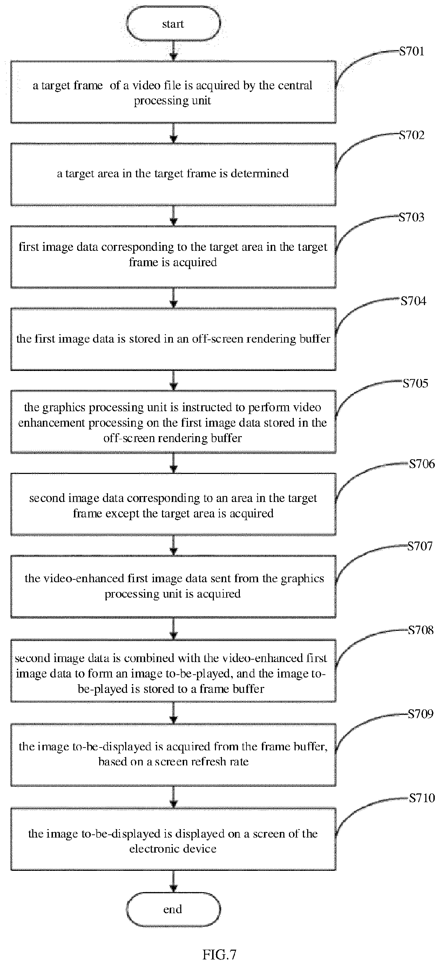

Referring to FIG. 7, a video processing method is provided in the embodiments of the present disclosure, which is applied to an electronic device. The electronic device further includes a central processing unit, a graphics processing unit and a screen. In the embodiments of the present disclosure, a processor serves as the execution body. The method includes operations S701 to S710.

In S701, a target frame of a video file is acquired by the central processing unit.

In S702, a target area in the target frame is determined.

In S703, first image data corresponding to the target area in the target frame is acquired.

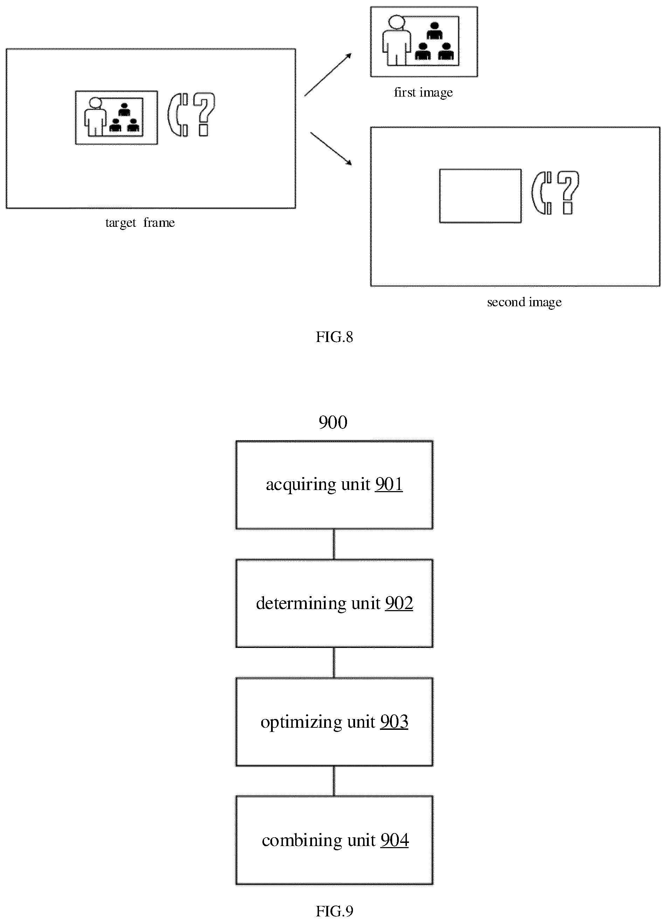

Specifically, as shown in FIG. 8, the target image can be divided into a first image and a second image. The first image is an image corresponding to the target area, while the second image is an image corresponding to an area in the target frame except the target area. Data corresponding to the first image is first image data, data corresponding to the second image is second image data.

In S704, the first image data is stored in an off-screen rendering buffer.

As an implementation, one off-screen rendering buffer is preset in the GPU. The GPU uses a rendering client module to render multiple frames to-be-rendered and to combine them, and then sends the result of the combining operation to the display screen for display. Specifically, the rendering client module may be an OpenGL module. A final location of an OpenGL rendering pipeline is at a frame buffer. The frame buffer defines a series of two-dimensional pixel storage arrays, and includes a color buffer, a depth buffer, a template buffer and an accumulation buffer. The frame buffer provided by a window system is used by the OpenGL by default.

GL_ARB_framebuffer_object extension of the OpenGL provides a way to create an extra frame buffer object (Frame Buffer Object, FBO). By using the frame buffer object, the OpenGL can redirect, to the FBO, the frame buffer originally drawn to the window.

The FBO also set a buffer beyond the frame buffer, that is, the off-screen rendering buffer. Then, the multiple acquired frames are stored to the off-screen rendering buffer. Specifically, the off-screen rendering buffer may be a storage space corresponding to the graphics processing unit, that is, the off-screen rendering buffer itself does not have a space for storing images, instead, it adopts mapping to one storage space in the graphics processing unit, and the images are actually stored in the storage space in the graphics processing unit that corresponds to the off-screen rendering buffer.

By correlating the first image data and the off-screen rendering buffer, the first image data can be stored to the off-screen rendering buffer, that is, the first image data can be searched out from the off-screen rendering buffer.

In S705, the graphics processing unit is instructed to perform video enhancement processing on the first image data stored in the off-screen rendering buffer.

Feature data corresponding to the video enhancement algorithm is convolved with the first image data, to optimize the first image data. Specifically, by rendering a rendering object and a texture object, the first image data stored in the off-screen rendering buffer is optimized, that is, an operation of rendering to texture (Render To Texture, RTT) is performed. The rendering object is the first image data. Specifically, the first image data can be stored in the FBO through the rendering object, where the rendering object serves as a variable. The first image data is assigned to the rendering object, and the rendering object and the FBO are correlated, the first image data can be stored to the off-screen rendering buffer. For example, a handle is set in the FBO, and the handle is set to point to the first image data, thus the handle may be the rendering object.

The video enhancement algorithm is assigned to the texture object. The feature data corresponding to the video enhancement algorithm is the parameters of the video enhancement algorithm, for example, the individual parameters of a median filter in the denoising. The specific operations of the video enhancement algorithm can be referred to above embodiments.

In S706, second image data corresponding to an area in the target frame except the target area is acquired.

In S707, the video-enhanced first image data sent from the graphics processing unit is acquired.

In S708, second image data is combined with the video-enhanced first image data to form an image to-be-played, and the image to-be-played is stored to a frame buffer.

The frame buffer corresponds to the screen, and is configured to store data needed to be displayed on the screen, such as the Framebuffer shown in FIG. 2. The Framebuffer is a kind of driving program interface in an inner core of the operating system. It is illustrated by taking the Android system as an example, Linux works under a protected mode, and thus a user process cannot use the interrupt call provided in the graphics card BIOS to directly write data and display it on the screen like those in a DOS system. The Linux abstracts the Framebuffer so that the user process can directly write data and displays it on the screen. The Framebuffer mechanism imitates the function of the graphics card, and can directly operate the display memory by reading and writing of the Framebuffer. Specifically, the Framebuffer can be regarded as a mapping of the display memory, and after the Framebuffer is mapped to a process address space, the reading and writing operations can be performed directly, and the written data can be displayed on the screen.

The frame buffer can be regarded as a space for storing data. The CPU or the GPU puts data to-be-displayed into the frame buffer, while the Framebuffer itself does not have any abilities for data operation. The data in the Framebuffer are read by a video controller according to the screen refresh rate and displayed on the screen.

Specifically, a rendering object is correlated to the Framebuffer, and the current rendering object is already optimized by the video enhancement algorithm, that is, the rendering object is the optimized first image data. The optimized first image data is sent to the Framebuffer for storing.

Then, the video-enhanced first image data and the second image data are stored to the frame buffer, and the central processing unit combines the first image data with the second data in the frame buffer, to form the image to-be-displayed.

In S709, the image to-be-displayed is acquired from the frame buffer, based on a screen refresh rate.

In S710, the image to-be-displayed is displayed on a screen of the electronic device.

As an implementation, the graphics processing unit reads image data frame by frame from the frame buffer according to the screen refresh rate, and performs rendering and combination processing on them for display on the screen.

Therefore, by the off-screen rendering, the first image data corresponding to the target area is optimized and sent to the frame buffer, to make the data in the frame buffer be video-enhanced data. This can avoid a problem that the first image data in the frame buffer that has not or not fully optimized is displayed on the screen due to the screen refresh rate which otherwise affects the user experience, compared with the following way: the first image data is stored to the frame buffer, and in the frame buffer, the video enhancement processing is performed and the second image data is combined with the video-enhanced first image data and forming the image to-be-displayed.

It should be noted that the portions of the above operations which are not described in detail can be referred to the aforementioned embodiments, which will not be repeated here again.

Referring to FIG. 9, a structural block diagram of a video processing apparatus provided by the embodiments of the present disclosure is illustrated. The video processing apparatus 900 may include an acquiring unit 901, a determining unit 902, an optimizing unit 903 and a combining unit 904.

The acquiring unit 901 is configured to acquire a target frame of a video file.

The determining unit 902 is configured to determine a target area in the target frame.

Specifically, the determining unit 902 is also configured to acquire, from the video file, multiple frames within a specified time period before the target frame image; acquire multiple moving objects in the multiple frames; determine a target moving object from the multiple moving objects; and determine, as a target area, an area corresponding to the target moving object in the target frame.

The optimizing unit 903 is configured to send the first image data corresponding to the target area to a graphics processing unit, and instruct the graphics processing unit to perform video enhancement processing on the first image data.

Specifically, the optimizing unit 903 is also configured to acquire the first image data corresponding to the target area in the target frame, and determine an optimization strategy for the first image data; send the first image data and the optimization strategy to the graphics processing unit, and instruct the graphics processing unit to perform the video enhancement processing on the first image data according to the optimization strategy. The optimization strategy for the first image data is determined by: acquiring the resolution of the first image data, and determining, according to the resolution of the first image data, the optimization strategy for the first image data.

In addition, the optimizing unit 903 is also configured to acquire first image data corresponding to the target area in the target frame; store the first image data to an off-screen rendering buffer; and instruct the graphics processing unit to perform the video enhancement processing on the first image data in the off-screen rendering buffer.

The combining unit 904 is configured to combine second image data corresponding to an area in the target frame except the target area with the video-enhanced first image data, and form an image to-be-displayed.

In addition, the combining unit 904 is configured to acquire the second image data corresponding to the area in the target frame except the target area; acquire the first image data sent by the graphics processing unit; and combine the second image data with the video-enhanced first image data and forming the image to-be-displayed, and store it to the frame buffer.

Further, the combining unit 904 is also configured to acquire the image to-be-displayed from the frame buffer according to a screen refresh rate; and make the image to-be-displayed displayed on the screen of the electronic device.

Those skilled in the art can clearly understand that, for the convenience and conciseness of description, the specific working processes of devices and modules described above can be referred to the corresponding process in the aforementioned method embodiments, which are not described herein.

In several embodiments provided in the present disclosure, the coupling between the modules can be electrical, mechanical or in other forms.

In addition, various functional modules in the various embodiments of the present disclosure may be integrated into one processing module, or each module may exist alone physically, or two or more modules may be integrated into one module. The above-mentioned integrated modules can be implemented in hardware or software functional modules.

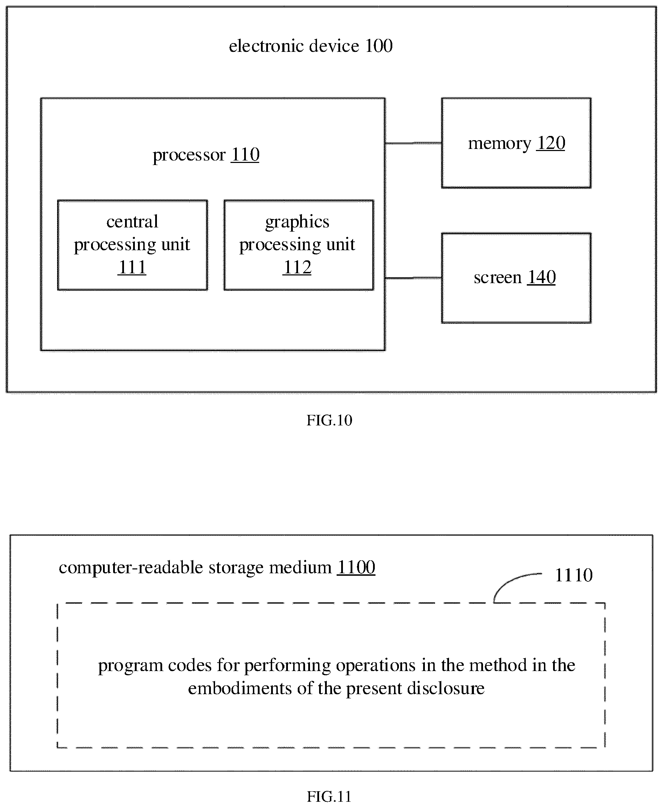

Referring to FIG. 10, a structural block diagram of an electronic device provided in the embodiments of the present disclosure is illustrated. The electronic device 100 may be an electronic device which is capable of running a client, such as a smart phone, a tablet computer, or an electronic book. The electronic device 100 in this disclosure may include one or more of the following components: a processor 110, a memory 120, a screen 140, and one or more clients. The one or more clients may be stored in the memory 120 and configured to be executed by one or more processors 110. One or more programs are configured to perform the methods described in the aforementioned method embodiments.

The processor 110 may include one or more processing cores. The processor 110 uses various interfaces and lines to connect various parts of the entire electronic device 100. By running or executing instructions, programs, code sets, or instruction sets stored in the memory 120, and calling data stored in the memory 120, various functions of the electronic device 100 are performed and data is processed by the processor 110. Optionally, the processor 110 may be implemented by at least one hardware of a Digital Signal Processing (DSP), a Field-Programmable Gate Array (FPGA) and a Programmable Logic Array (PLA).

Specifically, the processor 110 may include any of a Central Processing Unit (CPU) 111, a Graphics Processing Unit (GPU) 112 and a modem, or a combination thereof. The CPU mainly handles the operating system, user interface, and clients, etc. The GPU is configured to render and draw the display contents. The modem is configured for wireless communication. It can be understood that the above-mentioned modem may not be integrated into the processor 110, but may be implemented by a communication chip alone.

The memory 120 may include a Random Access Memory (RAM), or may include a Read-Only Memory (ROM). The memory 120 may be configured to store instructions, programs, codes, code sets or instruction sets. The memory 120 may include a program storage area and a data storage area. The program storage area may store instructions for implementing the operating system, instructions for implementing at least one function (such as touch function, sound playback function, or an image display function), instructions for implementing the various method embodiments, and the like. The data storage area can also store data (such as a phone book, audio and video data, chat record data) created by the terminal 100 during use.

The screen 120 is configured to display information input by the user, information provided to the user, and various graphical user interfaces of the electronic device. These graphical user interfaces can be composed of graphics, text, icons, numbers, videos, and any combination thereof. In an embodiment, a touch screen may be set on a display panel so as to form a whole with the display panel.

Please refer to FIG. 11, which illustrates a structural block diagram of a computer-readable storage medium provided by the embodiments of the present disclosure. The computer-readable storage medium 1100 stores program codes. The program codes can be invoked by a processor to perform the methods described in the above-mentioned method embodiments.

The computer-readable storage medium 1100 may be an electronic memory such as a flash memory, an Electrically Erasable Programmable Read Only Memory (EEPROM), an Erasable Programmable Read-Only Memory (EPROM), a hard disk, or ROM. Optionally, the computer-readable storage medium 1100 includes a non-transitory computer-readable storage medium. The computer-readable storage medium 1100 has a storage space with the program code 1111 which can perform any method step in the above-mentioned methods. These program codes can be read from or written into one or more computer program products. The program code 1111 may be compressed for example in an appropriate form.

Finally, it should be noted that the above embodiments are only used to illustrate the technical solutions of the present disclosure, not to limit them. Although the present disclosure is described in detail with reference to the aforementioned embodiments, those of ordinary skill in the art should understand that the technical solutions recorded in the aforementioned embodiments may be modified, or some of the technical features in the technical solutions are equivalently replaced. While these modifications or replacements do not drive the essence of the corresponding technical solutions to deviate from the spirit and scope of the technical solutions of the embodiments of the present disclosure.

## Claims

1. A video processing method, applied to a central processing unit of an electronic device, wherein the electronic device further comprises a graphics processing unit, and the method performed by the central processing unit comprises:

   acquiring a target frame of a video file;
   determining a target area in the target frame;

sending first image data corresponding to the target area to the graphics processing unit, and instructing the graphics processing unit to perform video enhancement processing on the first image data, wherein the video enhancement processing is configured to perform parameter optimization processing on an image in the video file to improve image quality of the video file; and

combining second image data corresponding to an area in the target frame except the target area with the video-enhanced first image data, and forming an image to-be-displayed.

2. The method according to claim 1, wherein the determining a target area in the target frame comprises:

acquiring, from the video file, a plurality of frames within a specified time period before the target frame;
acquiring a plurality of moving objects in the plurality of frames;
determining a target moving object from the plurality of moving objects; and
determining an area corresponding to the target moving object in the target frame as the target area.

3. The method according to claim 2, wherein the determining a target moving object from the plurality of moving objects comprises:

acquiring a reference picture, and acquiring a target object in the reference picture;
searching, from the plurality of moving objects, for a moving object matching the target object; and
determining the moving object matching the target object as the target moving object.

4. The method according to claim 1, wherein the determining a target area in the target frame comprises:

detecting a touch gesture on a screen of the electronic device; and
determining, based on the touch gesture, a target object selected from the target frame, and determining an area corresponding to the target object as the target area.

5. The method according to claim 4, wherein the determining, based on the touch gesture, a target object selected from the target frame image and determining an area corresponding to the target object as the target area, comprises:

determining a time duration of the touch gesture, in response to detecting the touch gesture;
determining, based on the touch gesture, the target object selected from the target frame in response to determining the time duration of the touch gesture is greater than a preset time duration, and determining the area corresponding to the target object as the target area.

6. The method according to any of claims 1-5, wherein the sending first image data corresponding to the target area to the graphics processing unit, and instructing the graphics processing unit to perform video enhancement processing on the first image data, comprises:

acquiring first image data corresponding to the target area in the target frame;
determining an optimization strategy for the first image data; and
sending the first image data and the optimization strategy to the graphics processing unit, and instructing the graphics processing unit to perform, according to the optimization strategy, the video enhancement processing on the first image data.

7. The method according to claim 6, wherein the determining an optimization strategy for the first image data comprises:

acquiring resolution of the first image data; and
determining, according to the resolution of the first image data, an optimization strategy for the first image data.

8. The method according to claim 7, wherein the determining, according to the resolution of the first image data, an optimization strategy for the first image, comprises:

determining whether the resolution of the first image data is greater than a preset resolution;
determining the optimization strategy for the first image data includes denoising and edge sharpening, in response to determining the resolution of the first image data is less than the preset resolution; and
determining the optimization strategy for the first image data includes saturation enhancement, in response to determining the resolution of the first image data is greater than or equal to the preset resolution.

9. The method according to claim 6, wherein the determining an optimization strategy for the first image data comprises:

   acquiring a type of the first image data; and
   determining, based on the type of the first image data, the optimization strategy for the first image data.

10. The method according to claim 1, wherein the sending the first image data corresponding to the target area to the graphics processing unit, and instructing the graphics processing unit to perform video enhancement processing on the first image data, comprises:

    acquiring the first image data corresponding to the target area in the target frame;
    storing the first image data to an off-screen rendering buffer; and
    instructing the graphics processing unit to perform the video enhancement processing on the first image data in the off-screen rendering buffer.

11. The method according to claim 10, wherein the combining second image data corresponding to an area in the target frame except the target area with the video-enhanced first image data, and forming an image to-be-displayed, comprises:

    acquiring second image data corresponding to an area in the target frame except the target area;
    acquiring the video-enhanced first image data sent from the graphics processing unit; and
    combining the second image data with the video-enhanced first image data and forming the image to-be-displayed, and storing the image to-be-displayed to a frame buffer.

12. The method according to claim 11, further comprising:

    after combining the second image data with the video-enhanced first image data, and forming the image to-be-displayed and storing the image to-be-displayed to the frame buffer, acquiring, based on a screen refresh rate, the image to-be-displayed from the frame buffer; and
    displaying the image to-be-displayed on the screen of the electronic device.

13. The method according to any of claims 1-12, wherein the sending the first image data corresponding to the target area to the graphics processing unit, and instructing the graphics processing unit to perform video enhancement processing on the first image data, comprises:

    acquiring a frame size of the video file;
    determining whether the frame size satisfies a specified condition;
    sending the first image data corresponding to the target area to the graphics processing unit, and instructing the graphics processing unit to perform the video enhancement processing on the first image data, in response to determining the frame size satisfies the specified condition; and
    performing the video enhancement processing on the first image data, in response to determining the frame size does not satisfy the specified condition.

14. The method according to any of claims 1-13, further comprising:

    before acquiring the target frame of the video file, acquiring a video frame rate of the video file;
    determining whether the video frame rate is greater than a preset frame rate; and
    performing frame dropping processing on the video file, in response to determining the video frame rate is greater than the preset frame rate.

15. The method according to any of claims 1-14, wherein the acquiring a target frame of a video file, comprises:

    acquiring a video playing request sent from a client, the video playing request comprising identity information of the video file to-be-played;
    searching, based on the identity information of the video file, for the video file; and
    acquiring the target frame of the video file.

16. The method according to claim 15, wherein the acquiring the target frame of the video file comprises:

decoding the video file to obtain a plurality of frames; and
determining, as the target frame, a frame currently to-be-processed from the plurality of frames.

17. The method according to any of claims 1-16, wherein the video enhancement processing comprises at least one of exposure enhancement, denoising, edge sharpening, contrast enhancement, or saturation enhancement.

18. A video processing apparatus, applied to a central processing unit of an electronic device, wherein the electronic device further comprises a graphics processing unit, and the video processing apparatus comprises:

an acquiring unit, configured to acquire a target frame of a video file;
a determining unit, configured to determine a target area in the target frame;
an optimizing unit, configured to send first image data corresponding to the target area to the graphics processing unit, and instruct the graphics processing unit to perform video enhancement processing on the first image data; and
a combining unit, configured to combine second image data corresponding to an area in the target frame except the target area with the video-enhanced first image data, and form an image to-be-displayed.

19. An electronic device, comprising:

a central processing unit and a graphics processing unit;
a memory; and
one or more application programs, wherein the one or more application programs are stored in the memory and configured to be performed by the central processing unit, the one or more application programs are configured to perform the method as claimed in any of claims 1-17.

20. A computer-readable medium, wherein the computer-readable storage medium stores program codes therein, the program codes are capable of being invoked by a processor to perform the method as claimed in any of claims 1-17.

```
┌─────────────────────────────────┐              ┌─────────────────────────────────┐
│  video player (hardware decoding)│              │  video player (software decoding)│
└─────────────────────────────────┘              └─────────────────────────────────┘
                │                                                  │
                ▼                                                  │
┌─────────────────────────────────┐                               │
│       multimedia framework       │                               │
└─────────────────────────────────┘                               │
                │                                                  │
                ▼                                                  │
┌─────────────────────────────────┐                               │
│          video decoder           │                               │
└─────────────────────────────────┘                               │
                │                                                  │
                ▼                                                  │
┌─────────────────────────────────┐                               │
│       video driving program      │                               │
└─────────────────────────────────┘                               │
                │                                                  │
                ▼                                                  ▼
┌──────────────────────────────────────────────────────────────────┐
│                          SurfaceFlinger                            │
└──────────────────────────────────────────────────────────────────┘
                                  │
                                  ▼
┌──────────────────────────────────────────────────────────────────┐
│                             display                                │
└──────────────────────────────────────────────────────────────────┘
                                  │
                                  ▼
┌──────────────────────────────────────────────────────────────────┐
│                            backlight                               │
└──────────────────────────────────────────────────────────────────┘
```

FIG. 1

```
┌────────┐
│ client │
└────────┘
     ▲
     │
     ▼
═══════════════════════════════════════════════════════════════════>
     ▲              ▲                                          bus
     │              │
     ▼              ▼
┌────────┐    ┌ ─ ─ ─┼─ ─ ─ ─ ─ ─ ─ ─ ─ ─ ─ ─ ─ ─ ─ ─ ─ ─ ─┐
│  CPU   │        ┌────────┐      ┌──────────────┐
└────────┘    │   │  GPU   │────▶ │ frame buffer │           │
                  └────────┘      └──────────────┘
              │                           │                   │
                                          ▼
              │                   ┌──────────────────┐        │      ┌──────────┐
                                  │ video controller │───────────────▶│ display  │
              │                   └──────────────────┘        │      └──────────┘
              └ ─ ─ ─ ─ ─ ─ ─ ─ ─ ─ ─ ─ ─ ─ ─ ─ ─ ─ ─ ─ ─ ─┘
```

FIG.2

start

a target frame of a video file is acquired — S301

a target area in the target frame is determined — S302

first image data corresponding to the target area is sent to the graphics processing unit, and the graphics processing unit is instructed to perform video enhancement processing on the first image data — S303

second image data corresponding to an area in the target frame except the target area is combined with the video-enhanced first image data to form an image to-be-displayed — S304

end

FIG.3

vision enhancement

— 501

— 502

on

type 1 on
type 2 on
type 3 on
type 4 on
type 5 on

60 seconds     skip ads

FIG.4

503

60 seconds    skip ads

FIG.5

start

a target frame of a video file is acquired by the central processing unit

S601

a target area in the target frame is determined

S602

first image data corresponding to the target area in the target frame is acquired

S603

an optimization strategy for the first image data is determined

S604

the first image data and the optimization strategy are sent to the graphics processing unit, and the graphics processing unit is instructed to perform the video enhancement processing on the first image data according to the optimization strategy

S605

second image data corresponding to an area in the target frame except the target area is combined with the video-enhanced first image data to form an image to-be-displayed

S606

end

FIG.6

start

a target frame of a video file is acquired by the central processing unit — S701

a target area in the target frame is determined — S702

first image data corresponding to the target area in the target frame is acquired — S703

the first image data is stored in an off-screen rendering buffer — S704

the graphics processing unit is instructed to perform video enhancement processing on the first image data stored in the off-screen rendering buffer — S705

second image data corresponding to an area in the target frame except the target area is acquired — S706

the video-enhanced first image data sent from the graphics processing unit is acquired — S707

second image data is combined with the video-enhanced first image data to form an image to-be-played, and the image to-be-played is stored to a frame buffer — S708

the image to-be-displayed is acquired from the frame buffer, based on a screen refresh rate — S709

the image to-be-displayed is displayed on a screen of the electronic device — S710

end

FIG.7

first image

second image

target frame

FIG.8

900

acquiring unit 901

determining unit 902

optimizing unit 903

combining unit 904

FIG.9

electronic device 100

processor 110

central processing unit 111

graphics processing unit 112

memory 120

screen 140

FIG.10

computer-readable storage medium 1100

1110

program codes for performing operations in the method in the embodiments of the present disclosure

FIG.11

## INTERNATIONAL SEARCH REPORT

| International application No. |
|---|
| **PCT/CN2019/109115** |

**A. CLASSIFICATION OF SUBJECT MATTER**

H04N 21/443(2011.01)i;  H04N 21/431(2011.01)i;  H04N 21/44(2011.01)i;  H04N 21/4402(2011.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 视频, 局部, 感兴趣, 目标, 运动, 人脸, 人, 区域, 图像, 优化, 增强, 去噪, 锐化, 对比度, 饱和度, 合成, 融合, video, ROI, target, object, motion, face, people, area, image, augment+, optimiz+, noise, sharpen+, contrast, saturation, synthesiz+, combin+, compos+

**C. DOCUMENTS CONSIDERED TO BE RELEVANT**

| Category* | Citation of document, with indication, where appropriate, of the relevant passages | Relevant to claim No. |
|---|---|---|
| PX | CN 109379625 A (GUANGDONG OPPO MOBILE TELECOMMUNICATIONS CORP., LTD.) 22 February 2019 (2019-02-22) claims 1-10, and description, paragraphs [0033], [0039], [0045]-[0047], [0052], [0067], [0077], [0086] and [0092] | 1-20 |
| X | CN 107370960 A (MEDIATEK INC.) 21 November 2017 (2017-11-21) description, paragraphs [0019], [0028]-[0033], [0042] and [0043], and figures 1-3 | 1-20 |
| A | CN 105227867 A (LENOVO (BEIJING) CO., LTD.) 06 January 2016 (2016-01-06) entire document | 1-20 |
| A | CN 106991675 A (LENOVO (BEIJING) CO., LTD.) 28 July 2017 (2017-07-28) entire document | 1-20 |
| A | CN 108737750 A (BEIJING KUANGSHI TECHNOLOGY CO., LTD.) 02 November 2018 (2018-11-02) entire document | 1-20 |
| A | JP 2014029566 A (INTERACTIVE COMMUNICATION DESIGN CO., LTD.) 13 February 2014 (2014-02-13) entire document | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2019** | **03 January 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

23

## INTERNATIONAL SEARCH REPORT

| International application No. |
| --- |
| **PCT/CN2019/109115** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2007147700 A1 (SAMSUNG ELECTRONICS CO., LTD.) 28 June 2007 (2007-06-28) entire document | 1-20 |

Form PCT/ISA/210 (second sheet) (January 2015)

**INTERNATIONAL SEARCH REPORT**
Information on patent family members

International application No.

**PCT/CN2019/109115**

| Patent document cited in search report | | | Publication date (day/month/year) | Patent family member(s) | | | Publication date (day/month/year) |
|---|---|---|---|---|---|---|---|
| CN | 109379625 | A | 22 February 2019 | None | | | |
| CN | 107370960 | A | 21 November 2017 | US | 9998720 | B2 | 12 June 2018 |
| | | | | TW | 201805892 | A | 16 February 2018 |
| | | | | US | 2017332060 | A1 | 16 November 2017 |
| | | | | TW | I639974 | B | 01 November 2018 |
| CN | 105227867 | A | 06 January 2016 | None | | | |
| CN | 106991675 | A | 28 July 2017 | None | | | |
| CN | 108737750 | A | 02 November 2018 | None | | | |
| JP | 2014029566 | A | 13 February 2014 | None | | | |
| US | 2007147700 | A1 | 28 June 2007 | KR | 100698845 | B1 | 22 March 2007 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811427955 X